# EUROPEAN PATENT APPLICATION

(11) **EP 2 107 233 A1**
(43) Date of publication of application: **07.10.2009**
(21) Application number: 08006841.4
(22) Date of filing: 04.04.2008
(51) Int. Cl.: F02M 37/10, F02M 37/14, F02M 37/00, B62J 35/00

(54) **Installation structure for fuel pump and pressure regulating valve of motorcycle**

(71) Applicant: Kwang Yang Motor Co., Ltd., San-Min Dist., Kaohsiung City (TW)
(72) Inventor: Tu, Shih-Wang, San min District Kaohsiung City (TW); Chien, Yung-Sheng, Gangshan Township Kaohsiung County (TW)
(74) Representative: Haft, von Puttkamer, Berngruber, Karakatsanis

(57) **Abstract**

An installation structure (3) for a fuel pump (33) and a pressure regulating valve (31) is installed in a fuel tank (4) of a motorcycle, and comprises a base (30), a pressure regulating valve (31), a support frame (32), and a pump (33). The base (30) is mounted with the support frame (32) thereon, while the support frame is formed with a pump receiving space (320) for receiving the pump (33). The pump has a fuel input opening (331) and a fuel output opening (332). The pressure regulating valve (31) has a fuel inlet (311) for receiving and regulating a fuel. The base further includes a connection base (300) formed with a pressure-regulating-valve receiving space (302) for receiving the pressure regulating valve (31). Meanwhile, the pressure-regulating-valve receiving space is transversely formed on the base, so that the pressure regulating valve is transversely mounted adjacent to a side of the pump.

## Description

### FIELD OF THE INVENTION

The present invention relates to an installation structure for a fuel pump and a pressure regulating valve, and more particularly to an installation structure for installing a fuel pump and a pressure regulating valve of a motorcycle in a fuel tank thereof.

### BACKGROUND OF THE INVENTION

Generally, a motorcycle is far smaller and more easily operated than an automobile. Thus, the motorcycle provides more mobility and convenience and has become a very popular vehicle nowadays. Recently, as gasoline prices rise day by day, motorcycles, which consume less gasoline than automobiles, have become an indispensable vehicle as well as a source of convenience for many people in their daily lives and work. Therefore, the consumer market of motorcycles still has an enormous growth potential. And because of that, motorcycle manufacturers work hard to research and develop motorcycles of different shapes and styles in order to attract consumers' attention, increase their market share and boost business growth.

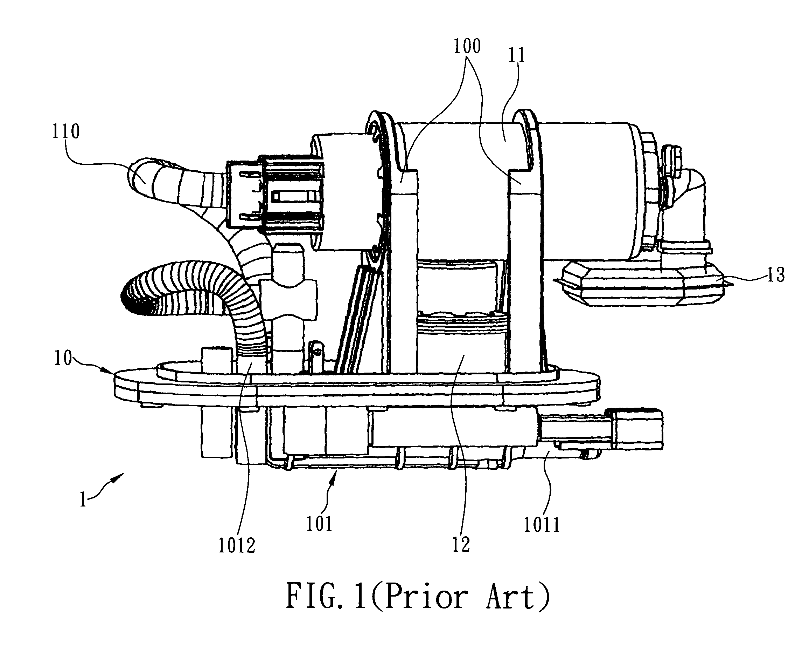

However, considering the various types of motorcycles designed and produced by each motorcycle manufacture, if specific components are to be designed for each and every type of motorcycle, the manufactures must suffer from substantially increased costs in manufacture, design, production, and material management. Take for example an installation structure for a fuel pump and a pressure regulating valve in a motorcycle, which is shown in Fig. 1 and described as follows.

An installation structure 1 for a fuel pump and a pressure regulating valve is mounted on an inner bottom of a fuel tank (not shown), and comprises a base 10, a pump 11, a pressure regulating valve 12, and a fuel filtering portion 13. The base 10 has a first surface provided with two support frames 100 for supporting and securing the pump 11, and a second surface provided with a pipe unit 101. The pipe unit 101 has a fuel outlet 1011 extended to an engine (not shown), and connected to a fuel consumption device (not shown). The pressure regulating valve 12 is vertically mounted between the two support frames 100, right beneath a lower edge of the pump 11. The pressure regulating valve 12 has an end connected to a pressure regulating opening (not shown) of the pipe unit 101. The pump 11 has a first end connected to the fuel filtering portion 13, and a second end connected to a fuel inlet 1012 of the pipe unit 101 through a fuel pipe 110. Thus, the pump 11 can pump fuel from the bottom of the fuel tank through the fuel filtering portion 13, and then deliver the fuel to the engine through the fuel outlet 1011 of the pipe unit 101. When a fuel pressure between the pump 11 and the pipe unit 101 is overloaded, the pressure regulating valve 12 can receive an excess of the fuel through the pressure regulating opening of the pipe unit 101, and drain the excess fuel back to the fuel tank.

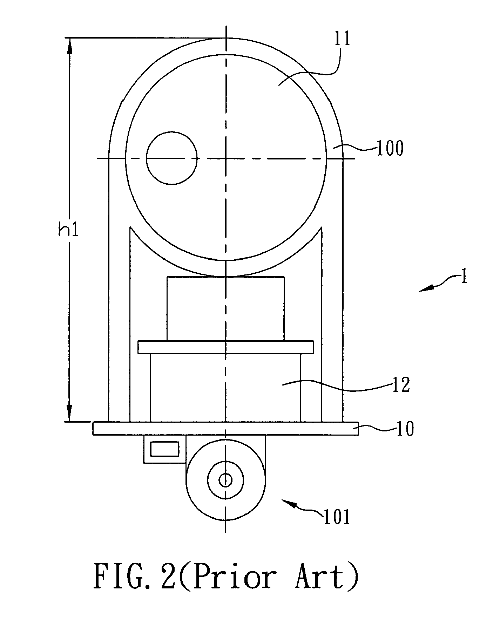

Referring now to Fig. 2, as the pressure regulating valve 12 is vertically mounted between the two support frames 100, right beneath the lower edge of the pump 11, an overall height h1 of the installation structure 1 for the fuel pump and the pressure regulating valve (i.e., a vertical height of the pressure regulating valve 12 plus a vertical height of the pump 11) can not be effectively shortened. As a result, the installation structure 1 for the fuel pump and the pressure regulating valve can only be mounted in a fuel tank whose inner space has a height similar to the overall height h1, but cannot be mounted in a fuel tank which has a different shape and whose inner space has an insufficient height. Thus, if it is desired to develop and design a fuel tank whose inner space has a height smaller than the overall height h1 of the existing installation structure 1 for the fuel pump and the pressure regulating valve, a manufacturer will have to develop and design an new installation structure for the fuel pump and the pressure regulating valve whose overall height matches the height of the inner space of the new fuel tank. Alternatively, a larger fuel tank must be developed and designed to accommodate the existing installation structure 1 for the fuel pump and the pressure regulating valve. Therefore, not only the costs of development and design are increased, but also the procedures for development, design, production, and material management cannot be effectively simplified. As a result, the cost of the entire motorcycle cannot be further reduced.

Therefore, it is important to apply the concept of universal modules to developing an installation structure for a fuel pump and a pressure regulating valve of a motorcycle which can be easily installed into fuel tanks having various shapes and volumes.

### SUMMARY OF THE INVENTION

Based on years of practical experiences and relevant experiments, the inventor finally succeeded in developing an installation structure for a fuel pump and a pressure regulating valve of a motorcycle, with the aims of effectively solving the abovementioned problem that, whenever a new fuel tank having a different shape and volume is developed and designed, the manufacturer must also design a new installation structure for a fuel pump and a pressure regulating valve whose overall height matches the new fuel tank, which not only leads to higher costs of development and design, but also prevents the procedures of development, design, production, and material management from being effectively simplified, so that the cost of the entire motorcycle cannot be further reduced.

Therefore, a primary object of the present invention is to provide an installation structure for a fuel pump and a pressure regulating valve of a motorcycle, which installation structure is installed in a fuel tank of the motorcycle and comprises a base, a pressure regulating valve, a support frame, and a pump. The base is mounted with the support frame thereon, while the support frame is formed with a pump receiving space for receiving the pump. The pump has a fuel input opening and a fuel output opening. The pressure regulating valve has a fuel inlet for receiving and regulating a fuel. The base is further provided with a connection base formed with a pressure-regulating-valve receiving space for receiving the pressure regulating valve, wherein the pressure-regulating-valve receiving space is transversely formed on the base, so that the pressure regulating valve can be transversely mounted adjacent to a side of the pump. Thus, all the components of the installation structure for the fuel pump and the pressure regulating valve can be effectively assembled, substantially shortening an overall height of the installation structure for the fuel pump and the pressure regulating valve, and thereby effectively solving the problem that, whenever a new fuel tank having a different shape and volume is developed and designed, the manufacturer must also design a new installation structure for a fuel pump and a pressure regulating valve whose overall height matches the new fuel tank.

A secondary object of the present invention is to provide an installation structure for a fuel pump and a pressure regulating valve of a motorcycle, wherein a fuel inlet of the pressure regulating valve is below the pump, so as to shorten an overall height of the installation structure for the fuel pump and the pressure regulating valve.

A third object of the present invention is to provide an installation structure for a fuel pump and a pressure regulating valve of a motorcycle, wherein a fuel inlet of the pressure regulating valve opens to a same direction as a fuel output opening of the pump, so as to shorten a length of a first fuel pipe and make the entire installation structure for the fuel pump and the pressure regulating valve more compact.

A fourth object of the present invention is to provide an installation structure for a fuel pump and a pressure regulating valve of a motorcycle, wherein a fuel inlet of the pressure regulating valve is connected to a pipe unit, so as to shorten a length of a first fuel pipe and make the entire installation structure for the fuel pump and the pressure regulating valve more compact.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an assembled perspective view of a traditional installation structure for a fuel pump and a pressure regulating valve;
Fig. 2 is a schematic cross-sectional view of the traditional installation structure for the fuel pump and the pressure regulating valve;
Fig. 3 is an exploded perspective view of an installation structure for a fuel pump and a pressure regulating valve according to a preferred embodiment of the present invention;
Fig. 4 is an operational view of the installation structure for the fuel pump and the pressure regulating valve according to the preferred embodiment of the present invention;
Fig. 5 is a schematic cross-sectional view of the installation structure for the fuel pump and the pressure regulating valve according to the preferred embodiment of the present invention; and
Fig. 6 is an assembled perspective view of the installation structure for the fuel pump and the pressure regulating valve according to the preferred embodiment of the present invention.

### DETAILED DESCRIPTION OF THE PREFERRED EMBODIMENTS

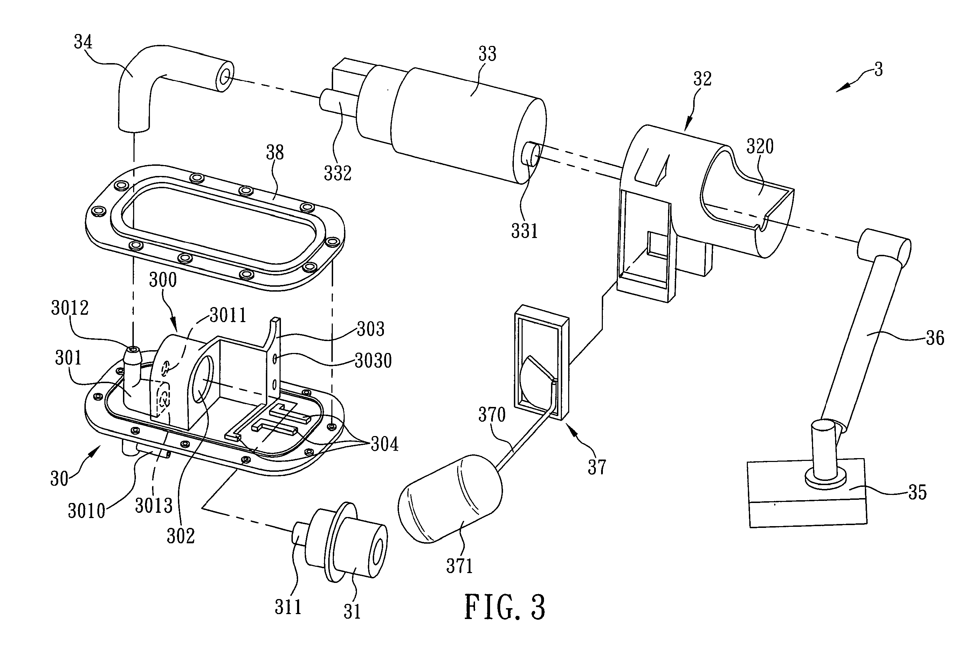

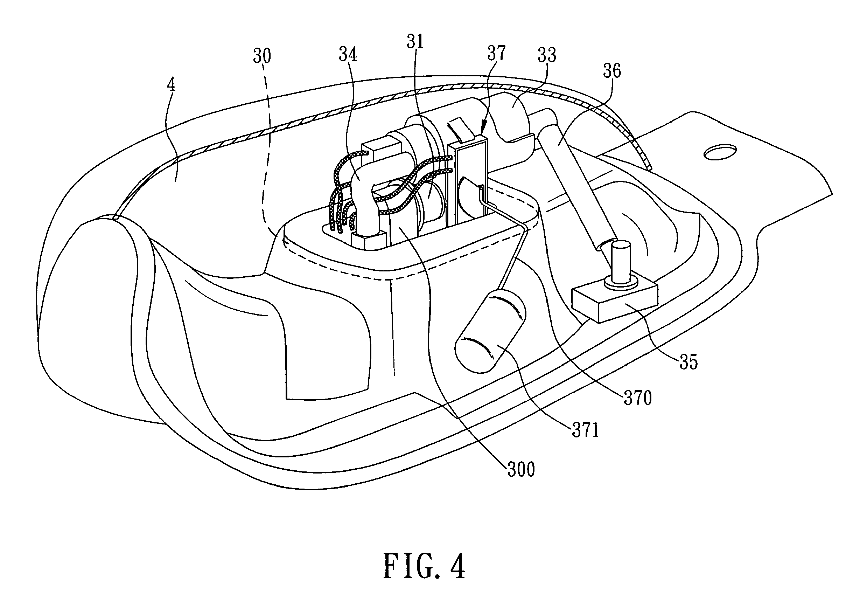

Referring now to Figs. 3 and 4, an installation structure 3 for a fuel pump and a pressure regulating valve of a motorcycle according to a preferred embodiment of the present invention is installed on an inner bottom of a fuel tank 4 of the motorcycle, and comprises a base 30, a pipe unit 301, a pressure regulating valve 31, a support frame 32, a pump 33, and a fuel filtering portion 35. The base 30 is formed with a connection base 300 adjacent to an end thereof, wherein the connection base 300 has a first end formed with a pressure-regulating-valve receiving space 302 for receiving the pressure regulating valve 31. The pressure regulating valve 31 is transversely mounted in the pressure-regulating-valve receiving space 302, which is formed with a pressure releasing opening 3011. The pipe unit 301 is mounted on a second end of the connection base 300, and can be a three-way pipe having a fuel outlet 3010 extended to an outer bottom of the fuel tank 4. Furthermore, the pipe unit 301 has a branch opening 3013 in communication with the pressure-regulating-valve receiving space 302. The support frame 32 is mounted on the base 30 along a longitudinal direction thereof adjacent to an end of the pressure regulating valve 31. Meanwhile, the support frame 32 has an end bearing against the end of the pressure regulating valve 31, and the support frame 32 has a side formed with a pump receiving space 320 for receiving the pump 33, so that the pump 33 is transversely mounted in the pump receiving space 320, adjacent to the end of the pressure regulating valve 31. Moreover, the pump 33 has a lower edge corresponding to a side of an upper edge of the pressure regulating valve 31. The pump 33 further has a fuel output opening 332 connected to a first fuel pipe 34, which is connected to a fuel intake 3012 of the pipe unit 301. The pump 33 also has a fuel input opening 331 connected to a second fuel pipe 36, which is connected to the fuel filtering portion 35.

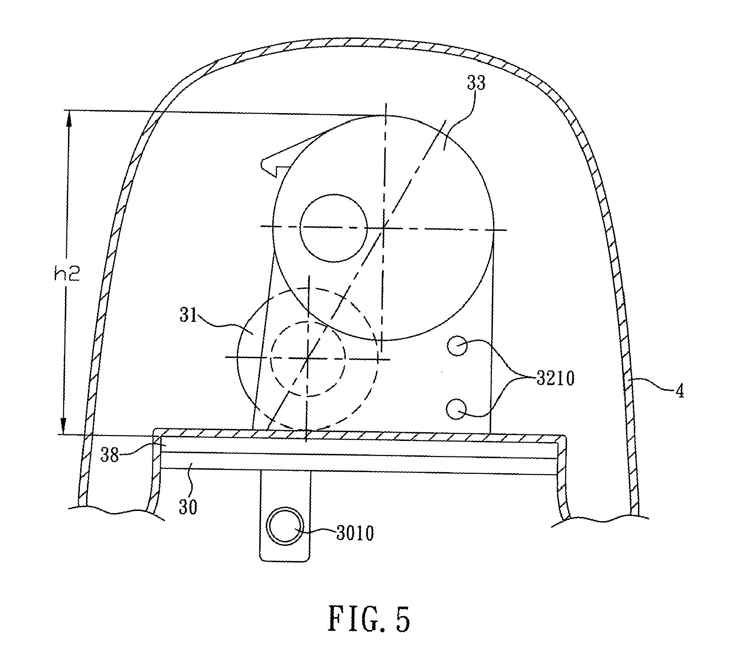

Referring to Figs. 3 and 4, in the preferred embodiment of the present invention, when the installation structure 3 for the fuel pump and the pressure regulating valve is installed into the fuel tank 4, the pump 33 can draw a minimum volume of fuel through an extension of the second fuel pipe 36 and the fuel filtering portion 35. Then, the fuel is delivered through the fuel intake 3012 and the fuel outlet 3010 of the pipe unit 301 to an engine (not shown), so that the engine can work. When a fuel pressure between the pump 33 and the pipe unit 301 is overloaded, a fuel inlet 311 of the pressure regulating valve 31 connected to the branch opening 3013 of the pipe unit 301 is used to receive an excess of the fuel and drain the excess fuel back to the fuel tank 4 through the pressure releasing opening 3011. Referring now to Figs. 4 and 5, the pump 33 is mounted adjacent to the end of the pressure regulating valve 31, while the lower edge of the pump 33 is corresponding to the side of the upper edge of the pressure regulating valve 31, i.e., the pump 33 is located at an upper right position or an upper left position of the pressure regulating valve 31. Thus, all the components of the installation structure 3 for the fuel pump and the pressure regulating valve can be effectively assembled, substantially reducing an overall height h2 of the installation structure 3 for the fuel pump and the pressure regulating valve. The overall height h2 of the installation structure 3 for the fuel pump and the pressure regulating valve is shorter than the overall height h1 of the traditional installation structure 1 for the fuel pump and the pressure regulating valve shown in Figs. 1 and 2. Therefore, following the concept of universal modules, the installation structure 3 for the fuel pump and the pressure regulating valve not only can be easily installed into fuel tanks 4 having different volumes, but also effectively enhances the convenience, and also offers more choices, in shape and structural designs of the fuel tank 4. Meanwhile, the present invention can solve the problem that, whenever a new fuel tank 4 having a different shape and volume is developed and designed, the manufacturer must also design a new installation structure 3 for a fuel pump and a pressure regulating valve whose overall height matches the new fuel tank 4, effectively lowering the cost and time required in developing and designing the installation structure 3 for the fuel pump and the pressure regulating valve and the fuel tank 4.

Referring still to Figs. 3 and 4, in the preferred embodiment of the present invention, the base 30 is provided with a leak-proof seal 38 on a periphery of an upper surface of the base 30, wherein the leak-proof seal 38 is preferably made of a rubber material. When the installation structure 3 for the fuel pump and the pressure regulating valve is installed and locked on the inner bottom of the fuel tank 4, the leak-proof seal 38 can effectively prevent a crack from being formed between the base 30 and the fuel tank 4, thereby avoiding the fuel from leaking through the bottom of the fuel tank 4.

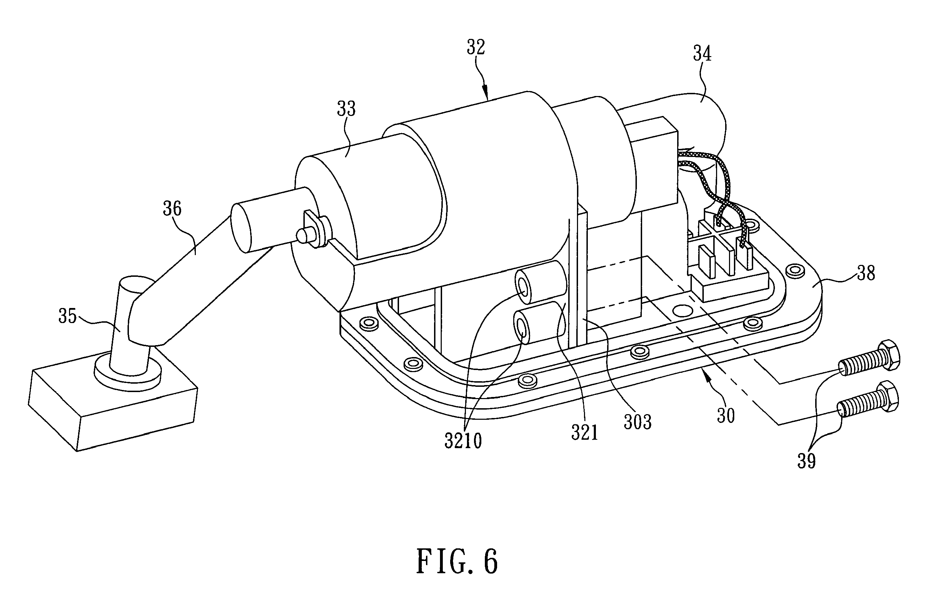

Referring now to Figs. 3 and 6, in the preferred embodiment of the present invention, the upper surface of the base 30 is formed with at least one protruded guide rail 304 corresponding to the support frame 32. Each of the guide rails 304 can cooperate with the connection base 300 to position the pressure regulating valve 31 and the support frame 32 between the corresponding guide rails 304 and the connection base 300, effectively enhancing the structural strength of the installation structure 3 for the fuel pump and the pressure regulating valve, so that the pressure regulating valve 31 and the support frame 32 will not separate from the installation structure 3 for the fuel pump and the pressure regulating valve under an external force, causing damage to the installation structure 3 for the fuel pump and the pressure regulating valve.

Furthermore, the pressure-regulating-valve receiving space 302 of the connection base 300 has a side wall comprising a first locking unit 303, which is formed with at least one first locking hole 3030. Meanwhile, the support frame 32 has a side wall which is formed on a lower edge of the pump receiving space 320 and comprises a second locking unit 321 corresponding to the first locking unit 303, wherein the second locking unit 321 is formed with at least one second locking hole 3210 corresponding to the at least one first locking hole 3030. Moreover, the first locking unit 303 and the second locking unit 321 are locked together by a locking member 39 penetrating the corresponding first locking hole 3030 and second locking hole 3210 of the first and second locking units 303 and 321. As a result, the structural strength of the installation structure 3 for the fuel pump and the pressure regulating valve can be effectively enhanced by the first locking unit 303 and the second locking unit 321, so as to prevent the pressure regulating valve 31 and the support frame 32 from being separated from the installation structure 3 for the fuel pump and the pressure regulating valve due to a external force, and thereby protect the fuel pump 33 and the pressure regulating valve 31 from being damaged.

Referring back to Figs. 3 and 4, in the preferred embodiment of the present invention, the support frame 32 has another side wall mounted with a fuel indicator 37, which has a side pivotally connected with a swing arm 370. The swing arm 370 has an end provided with a float 371. When the installation structure 3 for the fuel pump and the pressure regulating valve is installed on the inner bottom of the fuel tank 4, the float 371 is placed on the bottom of the fuel tank 4. When the fuel tank 4 is gradually filled with the fuel, the float 371 gradually rises with a rising liquid surface of the fuel because of a buoyancy of the float 371. When the fuel in the fuel tank 4 is gradually depleted, the float 371 goes down with the falling liquid surface of the fuel. Furthermore, as the float 371 rises or falls, the float 371 also actuates the swing arm 370 to pivot on the fuel indicator 37. Thus, the fuel indicator 37 can be used to detect a volume of the fuel in the fuel tank 4 and send a signal of the fuel volume to a fuel gauge of the motorcycle through a signal cable, so as to show the fuel volume to a motorcycle rider. Thus, the motorcycle rider is allowed to confirm the fuel volume in the fuel tank 4 by referring to the fuel indicator 37 at any time, and add more fuel into the fuel tank 4 when needed.

The present invention has been described with the preferred embodiment thereof and it is understood that many changes and modifications to the described embodiment can be carried out without departing from the scope and the spirit of the invention that is intended to be limited only by the appended claims.

## Claims

1. An installation structure for a fuel pump and a pressure regulating valve of a motorcycle, wherein the installation structure is installed in a fuel tank of the motorcycle and comprises: a base; a pressure regulating valve having a fuel inlet for receiving and regulating a fuel; a support frame mounted on the base and formed with a pump receiving space; and a pump received in the pump receiving space and having a fuel input opening and a fuel output opening; the installation structure being **characterized in that:**
the base further comprises a connection base formed with a pressure-regulating-valve receiving space for receiving the pressure regulating valve, wherein the pressure-regulating-valve receiving space is transversely formed on the base, so that the pressure regulating valve is transversely mounted adjacent to a side of the pump.

2. The installation structure for the fuel pump and the pressure regulating valve of the motorcycle of claim 1, wherein the fuel inlet of the pressure regulating valve is below the pump.

3. The installation structure for the fuel pump and the pressure regulating valve of the motorcycle of claim 2, wherein the fuel inlet of the pressure regulating valve opens to a same direction as the fuel output opening of the pump.

4. The installation structure for the fuel pump and the pressure regulating valve of the motorcycle of claim 1, wherein the fuel inlet of the pressure regulating valve is connected to a pipe unit.

5. The installation structure for the fuel pump and the pressure regulating valve of the motorcycle of claim 4, wherein the pipe unit is a three-way pipe comprising a fuel intake, a fuel outlet, and a branch opening.

6. The installation structure for the fuel pump and the pressure regulating valve of the motorcycle of claim 5, wherein the branch opening of the pipe unit is connected to the fuel inlet of the pressure regulating valve.

7. The installation structure for the fuel pump and the pressure regulating valve of the motorcycle of claim 5, wherein the fuel intake of the pipe unit is connected to the fuel output opening of the pump through a first fuel pipe.

8. The installation structure for the fuel pump and the pressure regulating valve of the motorcycle of claim 1, wherein the pressure-regulating-valve receiving space is formed with a pressure releasing opening.

9. The installation structure for the fuel pump and the pressure regulating valve of the motorcycle of claim 1, wherein the base is formed with at least one protruded guide rail for positioning the support frame.

10. The installation structure for the fuel pump and the pressure regulating valve of the motorcycle of claim 1, wherein the connection base has a first locking unit formed with at least one first locking hole, while the support frame has a second locking unit corresponding to the first locking unit, the second locking unit being formed with at least one second locking hole corresponding to the at least one first locking hole.

11. The installation structure for the fuel pump and the pressure regulating valve of the motorcycle of claim 1, wherein the support frame has a side wall mounted with a fuel indicator.

12. The installation structure for the fuel pump and the pressure regulating valve of the motorcycle of claim 11, wherein the fuel indicator has a side pivotally connected with a swing arm, which has an end provided with a float.

13. The installation structure for the fuel pump and the pressure regulating valve of the motorcycle of claim 1, wherein the base is provided with a leak-proof seal on a periphery of an upper surface of the base.

14. The installation structure for the fuel pump and the pressure regulating valve of the motorcycle of claim 1, further comprising a fuel filtering portion connected to the fuel input opening of the pump through a second fuel pipe.
